# EUROPÄISCHE PATENTANMELDUNG

(11) **EP 3 905 722 A1**
(43) Veröffentlichungstag der Anmeldung: **03.11.2021**
(21) Anmeldenummer: 21167752.1
(22) Anmeldetag: 09.04.2021
(51) Int. Cl.: H04R 25/00, H02J 50/00

(54) **BATTERIEMODUL UND HÖRVORRICHTUNG**

(30) Priorität: 23.04.2020 DE 102020205157
(71) Anmelder: Sivantos Pte. Ltd., Singapore 539775 (SG)
(72) Erfinder: NARAMPANAWE, Nishshanka Bandara, Singapore 649491 (SG); YAP, Heng Goh, Singapore 544736 (SG); GANAPATHY, Anand, Singapore 828739 (SG); THASAPPARAJ, Ruban Sundara Raj, 636009 Salem Tamil Nadu (IN); LER, Gee Heng, 10150 Georgetown, Penang (MY)
(74) Vertreter: FDST Patentanwälte

(57) **Zusammenfassung**

Die Erfindung betrifft ein Batteriemodul (8) für eine Hörvorrichtung (1), aufweisend
- eine Sekundärzelle (10),
- zwei Kontaktelemente (28,30) zur Kontaktierung der Sekundärzelle (10) an zwei unterschiedlichen Potentialflächen (16,32),
- eine Sicherung (14), die mit geringem Abstand zu dem einem positiven Potential zugeordneten Kontaktelement (28) angeordnet ist,
- einen Kupfermantel (36), der die Sekundärzelle (10) umgibt,
- einen Ferritmantel (42), der außenseitig zu dem Kupfermantel (36) angeordnet ist,
- eine Induktionsspule (12), die außenseitig zu dem Ferritmantel (42) angeordnet und die zum induktiven Energieempfang eingerichtet ist,
- einen Resonanzkondensator (18), der in geringem Abstand zu der Induktionsspule (12) mit dieser gekoppelt ist, und
- einen Thermistor (26) zur Überwachung einer Zellentemperatur, wobei der Thermistor (26) elektrisch isoliert zu der Sekundärzelle (10) angeordnet, aber mit geringem thermischem Widerstand mit dieser wärmeübertragungstechnisch gekoppelt ist.

## Beschreibung

Die Erfindung betrifft ein Batteriemodul für eine Hörvorrichtung. Des Weiteren betrifft die Erfindung eine Hörvorrichtung, insbesondere ein Hörhilfegerät, vorzugsweise ein ITE-Hörhilfegerät, mit einem solchen Batteriemodul.

Hörvorrichtungen dienen üblicherweise zur Ausgabe eines Tonsignals an das Gehör des Trägers dieser Hörvorrichtung. Die Ausgabe erfolgt dabei mittels eines Ausgabewandlers, meist auf akustischem Weg über Luftschall mittels eines Lautsprechers (auch als "Hörer" oder "Receiver" bezeichnet). Häufig kommen derartige Hörvorrichtungen dabei als sogenannte Hörhilfegeräte (auch kurz: Hörgeräte) zum Einsatz, die zur Versorgung einer Person mit einer Hörminderung dienen. Dazu umfassen die Hörvorrichtungen normalerweise einen akustischen Eingangswandler (insbesondere ein Mikrophon) und einen Signalprozessor, der dazu eingerichtet ist, das von dem Eingangswandler aus dem Umgebungsschall erzeugte Eingangssignal (auch: Mikrophonsignal) unter Anwendung mindestens eines üblicherweise nutzerspezifisch hinterlegten Signalverarbeitungsalgorithmus derart zu verarbeiten, dass die Hörminderung des Trägers der Hörvorrichtung zumindest teilweise kompensiert wird. Insbesondere im Fall eines Hörhilfegeräts kann es sich bei dem Ausgabewandler neben einem Lautsprecher auch alternativ um einen sogenannten Knochenleitungshörer oder ein Cochlea-Implantat handeln, die zur mechanischen oder elektrischen Einkopplung des Tonsignals in das Gehör des Trägers eingerichtet sind. Unter dem Begriff Hörvorrichtungen fallen zusätzlich insbesondere auch Geräte wie z.B. sogenannte Tinnitus-Masker, Headsets, Kopfhörer und dergleichen.

Zur Energieversorgung der elektronischen Komponenten der Hörvorrichtung wird zwischenzeitlich mehr und mehr auf wiederaufladbare Energiespeicher (insbesondere in Form von auch als "Akkus" bezeichneten Sekundärzellen) zurückgegriffen. Grundsätzlich ist es dabei denkbar, herkömmliche Batterieformate durch gleichformatige Sekundärzellen zu ersetzen. Da letztere meist jedoch andere Spannungswerte ausgeben, ist regelmäßig eine Wandlerelektronik zur Spannungswandlung auf die von den elektronischen Komponenten benötigten Spannungswerte erforderlich, so dass ein bloßer Austausch meist nicht möglich ist. Außerdem soll ein Wiederaufladen der Sekundärzellen auch ohne Entnahme dieser aus der entsprechenden Hörvorrichtung möglich sein, um den Nutzungskomfort zu erhöhen. Da Hörvorrichtungen, insbesondere Hörhilfegeräte regelmäßig am Körper getragen werden und somit Körperflüssigkeiten, insbesondere Schweiß ausgesetzt sind, ist außerdem ein kabelloses Laden wünschenswert. Denn dadurch kann das Gehäuse der Hörvorrichtung besonders dicht gestaltet werden.

Kabelloses Laden erfolgt üblicherweise mittels einer induktiven Ladespule, die im Ladebetrieb mit einer in einem Ladegerät angeordneten Sendespule kabellos, konkret induktiv gekoppelt wird. Hierbei ist allerdings - gegebenenfalls neben der vorstehend beschriebenen Wandlerelektronik (falls die elektronischen Komponenten hinsichtlich ihres Betriebsspannungswert nicht an die Ausgangsspannung der Sekundärzelle angepasst sind) - eine Ladeelektronik zur Steuerung des (zellenseitigen) Ladevorgangs erforderlich. Diese wird regelmäßig gemeinsam mit der Sekundärzelle zu einem "Batteriemodul" kombiniert.

Für induktives Laden ist eine vergleichsweise genaue Anordnung der Ladespule zu der Sendespule erforderlich. Des Weiteren müssen die beiden Spulen auch mit vergleichsweise geringem Abstand (regelmäßig im Bereich von etwa 3 Millimeter) zueinander angeordnet sein. Ansonsten wird die mögliche Energieausbeute bei der Energieübertragung beeinträchtigt, was zu langen Ladezyklen oder sogar zu einer unzureichenden oder schlimmstenfalls unmöglichen Aufladung der Sekundärspule führt. Gerade bei in dem Ohr zu tragenden Hörvorrichtungen (insbesondere bei sogenannten "in-dem-Ohr-Hörhilfegeräten", kurz auch als "IdO" oder ITE - für Englisch "in the ear" - bezeichnet) ist eine derart genaue oder nahe Anordnung zueinander aber bspw. aufgrund von häufig individuell angepassten Gehäusen meist nicht möglich.

Der Erfindung liegt die Aufgabe zugrunde, ein kabelloses Laden zu verbessern.

Diese Aufgabe wird erfindungsgemäß gelöst durch ein Batteriemodul mit den Merkmalen des Anspruchs 1. Des Weiteren wird diese Aufgabe erfindungsgemäß gelöst durch eine Hörvorrichtung mit den Merkmalen des Anspruchs 13. Vorteilhafte und teils für sich erfinderische Ausführungsformen und Weiterentwicklungen der Erfindung sind in den Unteransprüchen und der nachfolgenden Beschreibung dargelegt.

Das erfindungsgemäße Batteriemodul ist zum Einsatz in einer Hörvorrichtung, insbesondere einem Hörhilfegerät (kurz: "Hörgerät"), vorzugsweise einem ITE-Hörhilfegerät (d. h. einem in dem Ohr zu tragenden Hörhilfegerät, kurz als "ITE" bezeichnet) eingerichtet und vorgesehen.

Das erfindungsgemäße Batteriemodul weist eine Sekundärzelle (auch als "Akku" oder wiederaufladbare Batterie bezeichnet) und zwei Kontaktelemente zur Kontaktierung der Sekundärzelle an zwei unterschiedlichen Potentialflächen auf. Ferner weist das Batteriemodul eine Sicherung auf, die mit geringem Abstand zu dem einem positiven Potential zugeordneten Kontaktelement angeordnet ist. Diese Sicherung dient insbesondere zur Absicherung gegen oder von Kurzschlüssen insbesondere in der Sekundärzelle gegenüber einer nachgelagerten Schaltung, insbesondere einer nachgelagerten Elektronik. Das Batteriemodul weist weiterhin einen Kupfermantel auf, der die Sekundärzelle (insbesondere ringförmig geschlossen) umgibt, sowie einen Ferritmantel, der außenseitig zu dem Kupfermantel angeordnet ist (und insbesondere gleichermaßen wie der Kupfermantel ringförmig geschlossen ist). Außerdem weist das Batteriemodul eine Induktionsspule auf, die außenseitig zu dem Ferritmantel angeordnet und zum induktiven Energieempfang eingerichtet ist. Insbesondere zum Einstellen einer Resonanzfrequenz, bei der im bestimmungsgemäßen Ladebetrieb eine möglichst hohe Energieausbeute aus der induktiv auf die Induktionsspule übertragenen Energie ermöglicht wird, weist das Batteriemodul einen Resonanzkondensator auf, der in geringem Abstand zu der Induktionsspule mit dieser (elektrisch, insbesondere galvanisch) gekoppelt ist. Außerdem weist das Batteriemodul einen Thermistor auf, der zur Überwachung einer Zellentemperatur der Sekundärzelle insbesondere während des Ladebetriebs dient, wobei der Thermistor elektrisch isoliert zu der Sekundärzelle angeordnet, aber mit geringem thermischen Widerstand mit dieser wärmeübertragungstechnisch gekoppelt ist.

Aufgrund des der Sekundärzelle und dem Ferritmantel zwischengelagerten Kupfermantels werden vorteilhafterweise Wirbelströme (auch: "eddy-currents") und somit Wirbelstromverluste und/oder der Skin-Effekt insbesondere innerhalb der Sekundärzelle während des Ladebetriebs verringert oder können sogar verhindert werden. Dadurch wird wiederum die Energieausbeute auf der Seite des Batteriemoduls verbessert. Aufgrund der durch den Resonanzkondensator geschaffenen Möglichkeit, die Resonanzfrequenz insbesondere der Induktionsspule einzustellen, bevorzugt an die von einer Sendespule eines Ladegeräts ausgegebenen Ladefrequenz anzupassen und somit mit dem Ladegerät in Resonanz zu betreiben, kann ein im Vergleich zu einem herkömmlicherweise meist breitbandigem induktiven Ladeverfahren schmalbandiges Resonanzladeverfahren durchgeführt werden (d. h. insbesondere die Sendespule und die Induktionsspule sind hierbei resonant induktiv gekoppelt) und dabei ein möglicher Abstand zwischen der Sendespule und der Induktionsspule sowie optional auch eine Toleranz gegen "ungenaue" Anordnung zueinander gesteigert werden. Dadurch eignet sich das erfindungsgemäße Batteriemodul auch zum Einsatz in einem ITE.

Bevorzugt ist die Sekundärzelle als kreiszylindrischer Körper mit zumindest näherungsweise (d. h. innerhalb herkömmlicher Toleranzen) parallelen Stirnflächen ausgebildet. Insbesondere gleicht die Sekundärzelle in Ihrer Form einer Knopfzelle.

Die Sicherung ist optional als in sich geschlossenes Bauelement, beispielsweise nach Art einer Schmelzsicherung, oder alternativ als integrierter (Sicherungs-) Schaltkreis ausgebildet.

In einer optionalen Ausgestaltung umfasst das Batteriemodul eine Wandlerelektronik, um die von der Sekundärzelle bereitgestellte Spannung, konkret den korrespondierenden Spannungswert auf einen von einer Elektronik der Hörvorrichtung benötigten (Betriebs-) Spannungswert zu wandeln. Vorzugsweise - zusätzlich oder alternativ zu der Wandlerelektronik - umfasst das Batteriemodul eine Ladeelektronik, die das Laden der Sekundärzelle mittels der Induktionsspule (oder optional auch mittels galvanischer Kontakte) steuert und/oder überwacht.

In einer zweckmäßigen Ausführung sind die zwei Kontaktelemente zumindest abschnittsweise mittels einer Isolationsschicht im bestimmungsgemäßen Montagezustand gegenüber der Batterie elektrisch isoliert. Insbesondere sind die beiden Kontaktelemente, die vorzugsweise durch jeweils einen Metallblechstreifen gebildet sind, an benachbarten Stellen - insbesondere im Bereich der Mantelfläche der Sekundärzelle - mit einer nachgelagerten Schaltung (oder zumindest einer Leiterbahn) kontaktiert. Dadurch liegen die beiden Kontaktelemente in einem Bereich nebeneinander, der üblicherweise einer der beiden Potentialflächen (auch: Pol- oder Kontaktflächen) zugeordnet ist. Vorzugsweise ist also in diesem Fall auf der Mantelfläche der Sekundärzelle unterhalb der Kontaktelemente eine Isolationsschicht angeordnet. Beispielsweise handelt es sich bei der Isolationsschicht um eine selbstklebende Kunststofffolie oder um eine Lackschicht.

In einer zweckmäßigen Weiterbildung liegt der Thermistor auf der vorstehend genannten Isolationsschicht auf. Dadurch ist ein Kurzschluss des Thermistors selbst aufgrund der üblicherweise aus elektrisch leitfähigem Material gebildeten Oberfläche der Sekundärzelle verhindert. Außerdem ist der thermische Widerstand dieser Isolationsschicht vernachlässigbar, so dass mittels des Thermistors der aktuelle Temperaturwert der Sekundärzelle besonders genau und kurzschlusssicher abgegriffen werden kann.

In einer vorteilhaften Ausführung ist der Ferritmantel als eigenstabiles, insbesondere in sich starres oder auch steifes Spritzgießbauteil ausgebildet. In diesem Fall bildet der Ferritmantel eine Art Tragstruktur, in der die Sekundärzelle aufgenommen und an der auch die hier und im Folgenden beschriebenen Elemente des Batteriemoduls (insbesondere die Induktionsspule, optional auch die vorstehend genannte, den Kontaktelementen nachgeordnete Schaltung) gehaltert werden kann.

In einer alternativen Ausführung ist der Ferritmantel aus einem vergleichsweise flexiblen, insbesondere biegeweichen Folienmaterial ausgebildet. Vorzugsweise handelt es sich bei dem Folienmaterial um eine mehrlagige Kunststoff-Verbundfolie, die eine aus magnetischem Material, insbesondere einem weichmagnetisches Ferrit enthaltendes Material, gebildete Lage enthält.

In einer bevorzugten Ausführung ist der Kupfermantel aus einer, vorzugsweise zumindest innenseitig mit einer Isolationsschicht überzogenen, Kupferfolie ausgebildet. Vorzugsweise ist der Kupfermantel dabei topfartig ausgebildet, d. h. mittels der Kupferfolie ist nicht nur ein bandartiger Ring gebildet, sondern der Ring ist einseitig mit einer "Bodenfläche" "gedeckelt". Vorzugsweise ist diese Bodenfläche mit dem Ring an zumindest einer Stelle einstückig verbunden, insbesondere in-dem aus der flachen Kunststofffolie ein Band mit einer seitlichen Ausformung, das später die Bodenfläche bildet, ausgeschnitten wird, das Band zu dem Ring gelegt und die Ausformung als Bodenfläche eingeklappt wird.

In einer zweckmäßigen Weiterbildung weist die Kupferfolie eine Stärke von wenigstens 0,08 Millimeter (ohne Isolationsschicht und ohne gegebenenfalls vorhandene Haftschicht), insbesondere von 0,2 Millimeter auf. Wie vorstehend beschrieben ist die Kupferfolie in einem Zwischenfertigungsschritt bandartig zugeschnitten. In der vorliegenden Ausführung weist dieses Band jeweils endseitig zueinander komplementäre Verhakungsstrukturen auf, die nach dem Schlüssel-Schloss-Prinzip unter Bildung des (ringförmigen) Mantels ineinander gehakt sind. Alternativ sind die Enden der Kupferfolie miteinander überlappt. Durch die Ringform des Kupfermantels wird ermöglicht, dass Wirbelströme im Kupfermantel fließen und vorteilhafterweise nicht oder nur in geringem Maß in der Sekundärzelle auftreten. Vorzugsweise ist auch in dieser Ausführung die vorstehend beschriebene Bodenfläche vorhanden. Die Stärke von 0,2 Millimetern ermöglicht hierbei vorteilhafterweise, dass der Kupfermantel eine vergleichsweise hohe Stabilität aufweist, so dass insbesondere der flexible Ferritmantel daran befestigt werden kann.

In einer vorteilhaften Ausführung überzieht die in Bezug auf den Kupfermantel beschriebene Isolationsschicht auch die Außenseite der Kupferfolie. In diesem Fall liegt optional der Thermistor außenseitig auf der Kupferfolie auf.

In einer zweckmäßigen Ausführung weist das Batteriemodul einen Schaltungsträger auf, der zumindest die Sicherung, den Resonanzkondensator und den Thermistor trägt. Optional trägt der Schaltungsträger auch einen - insbesondere weiteren - (Glättungs-) Kondensator und eine Diode, die zusammen bevorzugt eine Gleichrichterschaltung bilden. Vorzugsweise weist der Schaltungsträger auch Anschlüsse (bspw. in Form von Leiterbahnenden und/oder Lötpads) auf, um eine Elektronik der Hörvorrichtung elektrisch mit dem Batteriemodul koppeln zu können.

In einer bevorzugten Weiterbildung ist der Schaltungsträger flexibel ausgebildet, insbesondere als sogenannte flexible Leiterplatte (oder: "Flex-PCB"). Dieser flexible Schaltungsträger ist dabei um den Ferritmantel umlaufend (d. h. diesen ringartig umgebend) angeordnet und trägt die Induktionsspule in Form einer (aufgedruckten oder anderweitig applizierten) Leiterbahn. Bevorzugt ist diese Leiterbahn über aneinander anliegenden Stoßkanten der ringartig gebogenen Leiterplatte hinweg kontaktiert, bspw. mittels Löten, Kontaktkleber oder dergleichen.

In einer optionalen Ausgestaltung weist die Kupferfolie des Kupfermantels eine Stärke von weniger als 0,15 Millimeter, insbesondere von etwa 0,13 Millimeter, aber von wenigstens 0,08 Millimeter (ohne Isolationsschicht und ohne gegebenenfalls vorhandene Haftschicht) auf und ist somit vergleichsweise biegeweich. In diesem Fall sind die Enden der Kupferfolie vorzugsweise überlappt. Die Induktionsspule ist in diesem Fall als Litzenspule oder Drahtspule (vorzugsweise mit nur zwei Windungen und insbesondere einem Durchmesser der Litze oder des Drahts von etwa 0,3 Millimeter, insbesondere von wenigstens 0,28 Millimeter) auf den zweckmäßigerweise als Spritzgießbauteil ausgeführten Ferritmantel aufgebracht. Vorzugsweise ist die Induktionsspule aus Kupfer gebildet.

Bevorzugt ist die Induktionsspule in Längsrichtung oder Axialrichtung des Ferritmantels gesehen mittig zu diesem angeordnet.

Vorzugsweise wird diese Variante des Batteriemoduls dadurch gebildet, dass auf die Sekundärzelle die Kontaktelemente sowie die diesen zugeordnete Isolationsschicht aufgebracht werden. Anschließend wird der Kupfermantel, vorzugsweise mit allseitiger Isolationsschicht, mittels eines Klebebands oder einer vergleichbaren Haftschicht auf die Sekundärzelle aufgebracht. Auf den Kupfermantel wird anschließend, insbesondere ebenfalls mit Klebeband oder einer vergleichbaren Haftschicht der Schaltungsträger, der sich in dieser Variante nur über einen Bruchteil der Mantelfläche der Sekundärzelle erstreckt, aufgebracht und mit den Kontaktelementen leitfähig verbunden, insbesondere verlötet. Der Thermistor wird in diesem Fall vorzugsweise auf die vergleichsweise dünne Kupferfolie außenseitig aufgebracht. Die sich aus den vorstehenden Schritten ergebende Baugruppe wird anschließend in den eigenstabilen, spritzgegossenen Ferritmantel eingeschoben und auf diesen die Induktionsspule aufgewickelt. Die Induktionsspule wird anschließend mit entsprechenden Leiterbahnen des Schaltungsträgers leitfähig verbunden, bspw. verlötet.

In einer alternativen Ausgestaltung weist das Batteriemodul den vergleichsweise dicken Kupfermantel, den flexiblen Ferritmantel und die als Leiterbahn auf dem flexiblen Schaltungsträger ausgebildete Induktionsspule auf. In diesem Fall wird der Kupfermantel um die Sekundärzelle gelegt (und insbesondere auch die Bodenfläche angefaltet). Die Ferritfolie wird anschließend mittels Klebeband (oder einer vergleichbaren Haftschicht) auf die Kupferfolie aufgeklebt. Der flexible Schaltungsträger wird auf den Schaltungsträger aufgeklebt (mittels außenseitig auf der Ferritfolie oder innenseitig am Schaltungsträger angeordneter Haftschicht oder Klebeband). Anschließend werden die Kontaktelemente mit korrespondierenden Leiterbahnen des Schaltungsträgers elektrisch leitfähig verbunden. Vorzugsweise weist das Batteriemodul Abmessungen von weniger als 10,8 Millimeter Durchmesser (gegebenenfalls unter Vernachlässigung von Kontaktfahnen des Schaltungsträgers zur Anbindung an die Elektronik der Hörvorrichtung) auf. Dadurch wird ein Einsatz im ITE ermöglicht oder zumindest vorteilhaft unterstützt.

Die erfindungsgemäße Hörvorrichtung, insbesondere das Hörgerät, bevorzugt das ITE weist das vorstehend beschriebene Batteriemodul auf. Insbesondere weist die Hörvorrichtung also auch die sich aus dem Batteriemodul ergebenden Vorteile gleichermaßen auf.

Nachfolgend werden Ausführungsbeispiele der Erfindung anhand einer Zeichnung näher erläutert. Darin zeigen:
- Fig. 1: in einer Perspektivansicht schematisch ein Hörhilfegerät,
- Fig. 2: in einem schematischen Schaltplan das Batteriemodul,
- Fig. 3: in einer schematischen Perspektivansicht ein Batteriemodul des Hörhilfegeräts,
- Fig. 4: in einer schematischen Explosionsdarstellung das Batteriemodul,
- Fig. 5-7: jeweils in schematischen Detailansichten das Batteriemodul,
- Fig. 8: in einer schematischen Einzelansicht einen Kupfermantel des Batteriemoduls,
- Fig. 9: in einer schematischen Perspektivansicht ein weiteres Ausführungsbeispiel des Batteriemoduls,
- Fig. 10: in Ansicht gemäß Fig. 3 das Batteriemodul gemäß Fig. 9,
- Fig. 11, 12: in Ansicht gemäß Fig. 8 den Kupfermantel bzw. einen Ferritmantel des Batteriemoduls gemäß Fig. 9, und
- Fig. 13, 14: in Ansicht gemäß Fig. 5 jeweils eine Detailansicht des Batteriemoduls gemäß Fig. 9.

Einander entsprechende Teile sind in allen Figuren stets mit gleichen Bezugszeichen versehen.

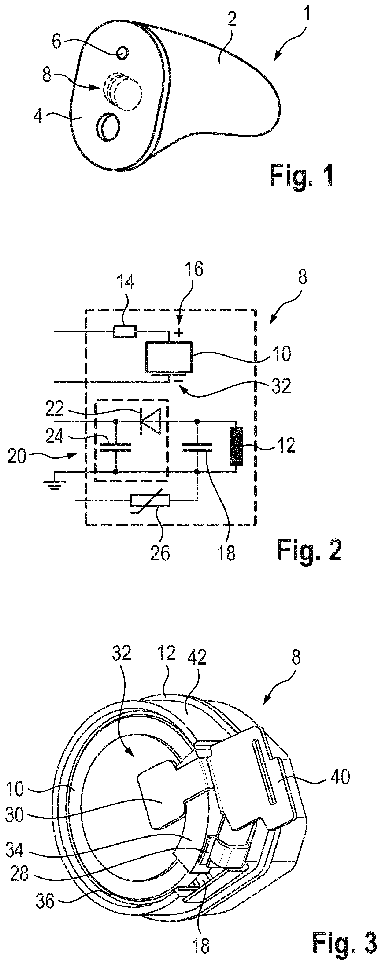

In Fig. 1 ist eine Hörvorrichtung in Form eines Hörhilfegeräts, hier konkret ein in dem Ohr zu tragendes Hörhilfegerät (kurz: "ITE 1", für "in the ear") schematisch dargestellt. Das ITE 1 weist ein an den Gehörgang angepasstes Gehäuse 2 auf, das einen mehrere elektronische Komponenten aufnehmenden Gehäuseinnenraum umgibt. Zum Verschließen des Gehäuseinnenraums weist das Gehäuse 2 eine sogenannte Deckplatte oder "Faceplate 4" auf. Als elektronische Komponenten umfasst das ITE 1 zumindest ein Mikrofon, das mittels einer Mikrofonöffnung 6 mit der Umgebung in fluidischer Verbindung steht. Daneben umfasst das ITE 1 einen nicht näher dargestellten Signalprozessor sowie ein Batteriemodul 8, das zur Energieversorgung der elektronischen Komponenten dient.

Das Batteriemodul 8 umfasst eine Sekundärzelle 10 sowie eine Induktionsspule 12 zum induktiven, kabellosen Laden der Sekundärzelle 10. Der Aufbau des Batteriemoduls 8 ist im Folgenden näher beschrieben.

In Fig. 2 ist dabei zunächst der prinzipielle Aufbau des Batteriemoduls 8 anhand eines schematischen Schaltplans dargestellt. Das Batteriemodul 8 ist konkret zum induktiven Laden mittels eines sogenannten magnetischen Resonanz-Ladeverfahrens eingerichtet und vorgesehen. Das Batteriemodul 8 weist dabei eine Sicherung 14 auf, die ohne Zwischenschaltung anderer elektronischer Bauelemente mit einer einem positiven Potential zugeordneten Potentialfläche (auch als "Pluspol 16" bezeichnet) der Sekundärzelle 10 verschaltet ist. Die Sicherung 14 ist dabei (nachfolgend näher beschrieben) außerdem mit möglichst geringem Abstand (hinsichtlich einer Leitungslänge) zu dem Pluspol 16 angeordnet. Das Batteriemodul 8 weist außerdem einen Resonanzkondensator 18 auf, der - ebenfalls ohne Zwischenschaltung anderer elektronischer Bauelemente - mit den beiden Anschlussenden der Induktionsspule 12 verschaltet ist. Der Resonanzkondensator 18 dient zur Einstellung der Resonanz-Frequenz, konkret im Verhältnis zur Frequenz eines zugeordneten induktiven Ladegeräts, für das resonante Ladeverfahren. Die Induktionsspule 12 ist außerdem mit einer Gleichrichterschaltung 20 des Batteriemoduls 8 verschaltet, die zur Gleichrichtung von Wechselspannung in Gleichspannung dient und dazu eine Diode 22 (konkret eine Schottky-Diode) und einen Glättungskondensator 24 umfasst. Außerdem umfasst das Batteriemodul 8 einen Thermistor 26 zur Temperaturüberwachung der Sekundärzelle 10, insbesondere während eines Ladebetriebs.

In Fig. 3-7 ist ein erstes Ausführungsbeispiel des Batteriemoduls 8 näher dargestellt. Das Batteriemodul 8 umfasst neben den vorstehend beschriebenen Komponenten ein erstes Kontaktelement 28, das dem Pluspol 16 der Sekundärzelle 10 zugeordnet ist, sowie ein zweites Kontaktelement 30, dass dem Minuspol 32 (also der korrespondierenden Potentialfläche) der Sekundärzelle 10 zugeordnet ist. Die beiden Kontaktelemente 28 und 30 liegen an entgegengesetzten Stirnflächen der Sekundärzelle 10 an und sind zur Mantelfläche der Sekundärzelle 10 hin abgewinkelt. Um einen Kurzschluss zwischen den Kontaktelementen 28 und 30, konkret zwischen dem zweiten Kontaktelement 30 und des auch die Mantelfläche bildenden Pluspols 16 zu vermeiden, ist der Mantelfläche und den beiden Kontaktelementen 28 und 30 als Isolationsschicht eine Folie 34 zwischengeordnet.

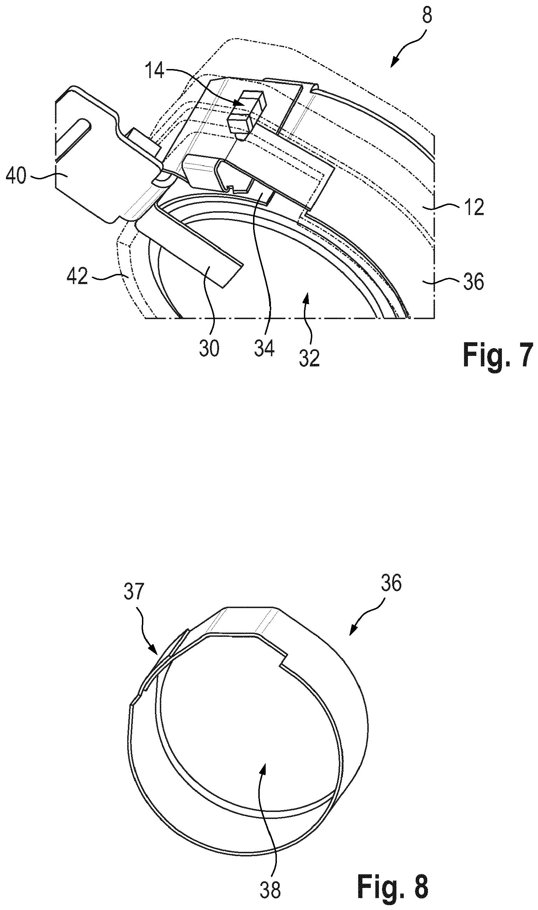

Um die Sekundärzelle 10 und die beiden Kontaktelemente 28 und 30 ist ein Kupfermantel 36 gelegt. Dieser ist aus einer 0,13 Millimeter starken, mit einer Isolationsschicht beschichteten Kupferfolie gebildet, die zu einem Band zugeschnitten und zu einem Ring gelegt ist, wobei die beiden Enden des Bands in einem Stoßbereich 37 einander überlappen (s. Fig. 8). Der Kupfermantel 36 weist auch eine Bodenlage oder Bodenfläche 38 auf, die die den Pluspol 16 bildende Stirnfläche der Sekundärzelle 10 abdeckt. Diese Bodenfläche 38 ist ebenfalls aus der isolierten Kupferfolie gebildet. Das Batteriemodul 8 weist außerdem einen Schaltungsträger in Form einer gefalteten Leiterplatte 40 auf, der nicht näher dargestellte Leiterbahnen zur Veranstaltung der Sekundärzelle 10 sowie der Induktionsspule 12 mit nachgeordneten Schaltungen, beispielsweise der Gleichrichterschaltung 20, dem Signalprozessor des ITE 1 etc. aufweist. Außerdem sind an der Leiterplatte 40 die Sicherung 14, der Resonanzkondensator 18 und der Thermistor 26 angebunden und gehaltert. Die beiden Kontaktelemente 28 und 30 sind ebenfalls mit der Leiterplatte 40, konkret mit darauf angeordneten Leiterbahnen kontaktiert.

Das Batteriemodul 8 weist ferner einen Ferritmantel 42 auf, der außenseitig zu dem Kupfermantel 36 angeordnet ist. Der Ferritmantel 42 ist im vorliegenden Ausführungsbeispiel aus einem (insbesondere mit weichmagnetischen) Ferrit gefüllten Kunststoff spritzgegossen und mithin vergleichsweise starr und eigenstabil. Um den Ferritmantel 42 ist die Induktionsspule 12 in Form einer Drahtspule, im vorliegenden Ausführungsbeispiel mit zwei Wicklungen, gewickelt. Die Induktionsspule 12 ist ebenfalls mit der Leiterplatte 40 kontaktiert.

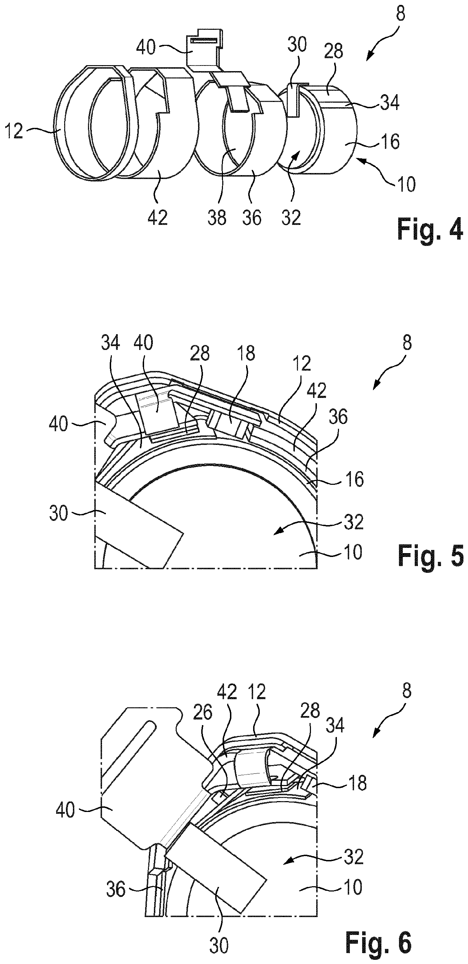

In Fig. 5 ist die Position des Resonanzkondensators 18 dargestellt. Zwar ist der Resonanzkondensator 18 auf einer der Induktionsspule 12 abgewandten Innenseite der Leiterplatte 40 angeordnet. In Bezug auf die Leitungslänge (konkret Leiterbahnlänge) zwischen der Induktionsspule 12 und dem Resonanzkondensator 18 ist letzterer aber mit möglichst geringem Abstand zu der Induktionsspule 12 angeordnet. Dadurch können parasitäre Induktivitäten und/oder Kapazitäten verringert oder vermieden werden, so dass die Präzision der Einstellung der Resonanzfrequenz besonders hoch ist.

Aus Fig. 6 geht hervor, dass der Thermistor 26 direkt auf dem Kupfermantel 36 angeordnet ist. Aufgrund der Isolationsschicht des Kupfermantels 36 ist ein Kurzschluss der beiden Anschlüsse des Thermistors 26 über das Kupfermaterial verhindert. Da der Kupfermantel 36 vergleichsweise dünn ist und eine hohe materialbedingte thermische Leitfähigkeit aufweist, treten auch nur vernachlässigbare thermische Verluste bei der Wärmeleitung zwischen der Sekundärzelle 10 und dem Thermistor 26 auf.

In Fig. 7 ist die Position der Sicherung 14 dargestellt, die über die Dicke der Leiterplatte 40 hinweg gegenüberliegend zum ersten Kontaktelement 28 auf der Leiterplatte 40 und somit mit näherungsweise direkter Verbindung zum dem Pluspol 16 zugeordneten ersten Kontaktelement 28 angeordnet ist. In Fig. 7 sind die außerhalb der Leiterplatte 40 angeordneten Komponenten, konkret der Ferritmantel 42 und die Induktionsspule 12 transparent dargestellt.

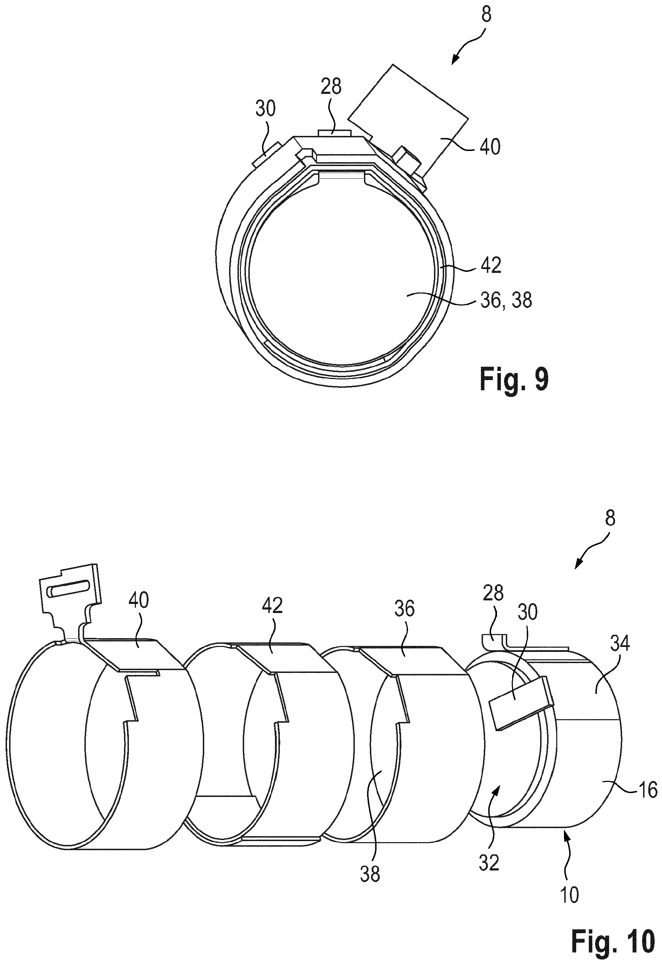

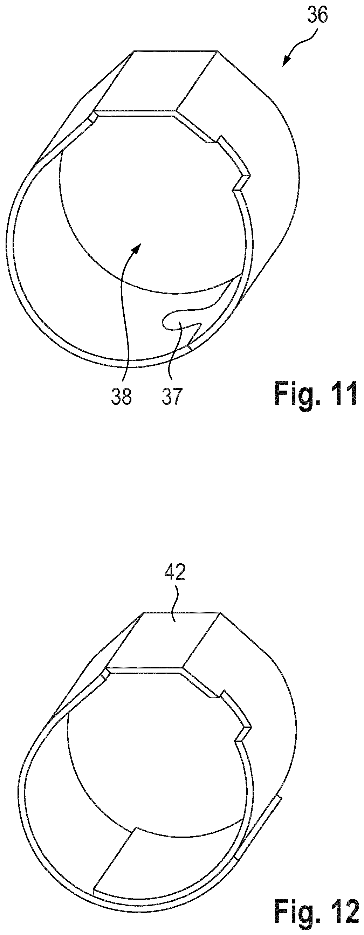

In den Figuren 9-14 ist ein weiteres Ausführungsbeispiel des Batteriemoduls 8 dargestellt. In diesem Fall ist der Kupfermantel 36 aus einer 0,2 Millimeter starken Kupferfolie ausgebildet, die in Ringform gelegt einen eigenstabilen Topf bildet (s. Fig. 11). Zur Verbindung im Stoßbereich 37 sind beide Enden des Folienbands mit gegengleichen (komplementären) Verhakungsstrukturen, ähnlich Puzzlesteinen, zur Verbindung nach dem Schlüssel-Schloss-Prinzip, konkret für eine formschlüssige Verbindung ausgebildet und ineinander gesteckt. Der Ferritmantel 42 ist hierbei aus einer flexiblen Verbundfolie gebildet, der eine ferrithaltige Lage enthält und auf den Kupfermantel 36 aufgeklebt ist. Die Leiterplatte 40 ist als flexible Leiterplatte ausgebildet, die außenseitig um den Ferritmantel 42 als Ring umlaufend aufgelegt, vorzugsweise aufgeklebt ist. Die Induktionsspule 12 ist in Form einer mehrfach umlaufenden Leiterbahn auf der Leiterplatte 40 ausgebildet.

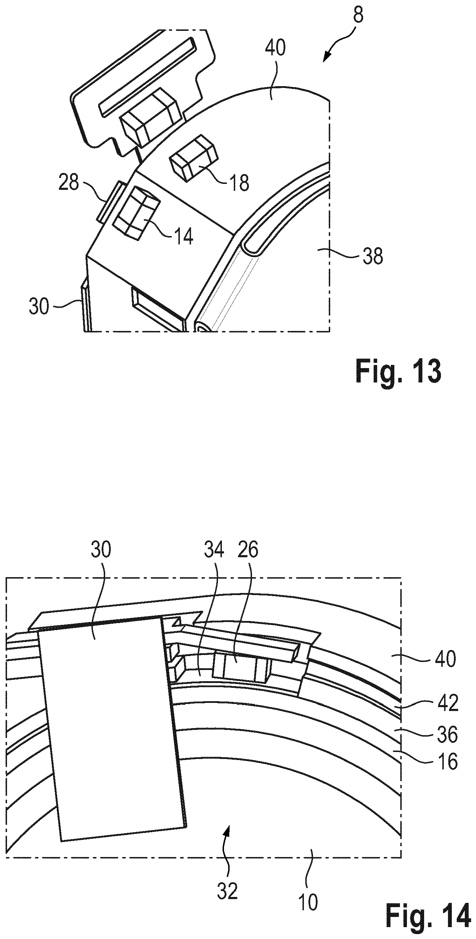

Wie in Fig. 13 schematisch dargestellt, ist der Resonanzkondensator 18 außenseitig auf der Leiterplatte 40 angeordnet, konkret neben der die Induktionsspule 12 bildenden Leiterbahn. Daneben ist die Sicherung 14 mit geringem Abstand zum ersten Kontaktelement 28, konkret zu dessen Kontaktstelle mit einer korrespondierenden Leiterbahn der Leiterplatte 40 angeordnet.

In Fig. 14 ist dargestellt, dass der Thermistor 26 in diesem Ausführungsbeispiel auf der Folie 34 auf der Sekundärzelle 10 aufliegt, so dass nur ein besonders geringer thermischer Widerstand überbrückt werden muss.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

### Bezugszeichenliste

- 1: ITE
- 2: Gehäuse
- 4: Faceplate
- 6: Mikrofonöffnung
- 8: Batteriemodul
- 10: Sekundärzelle
- 12: Induktionsspule
- 14: Sicherung
- 16: Pluspol
- 18: Resonanzkondensator
- 20: Gleichrichterschaltung
- 22: Diode
- 24: Glättungskondensator
- 26: Therm istor
- 28: Kontaktelement
- 30: Kontaktelement
- 32: Minuspol
- 34: Folie
- 36: Kupfermantel
- 37: Stoßbereich
- 38: Bodenfläche
- 40: Leiterplatte
- 42: Ferritmantel

## Patentansprüche

1. Batteriemodul (8) für eine Hörvorrichtung (1), aufweisend
- eine Sekundärzelle (10),
- zwei Kontaktelemente (28,30) zur Kontaktierung der Sekundärzelle (10) an zwei unterschiedlichen Potentialflächen (16,32),
- eine Sicherung (14), die mit geringem Abstand zu dem einem positiven Potential zugeordneten Kontaktelement (28) angeordnet ist,
- einen Kupfermantel (36), der die Sekundärzelle (10) umgibt,
- einen Ferritmantel (42), der außenseitig zu dem Kupfermantel (36) angeordnet ist,
- eine Induktionsspule (12), die außenseitig zu dem Ferritmantel (42) angeordnet und die zum induktiven Energieempfang eingerichtet ist,
- einen Resonanzkondensator (18), der in geringem Abstand zu der Induktionsspule (12) mit dieser gekoppelt ist, und
- einen Thermistor (26) zur Überwachung einer Zellentemperatur, wobei der Thermistor (26) elektrisch isoliert zu der Sekundärzelle (10) angeordnet, aber mit geringem thermischem Widerstand mit dieser wärmeübertragungstechnisch gekoppelt ist.

2. Batteriemodul (8) nach Anspruch 1,
wobei die zwei Kontaktelemente (28,30) zumindest abschnittsweise mittels einer Isolationsschicht (34) im bestimmungsgemäßen Montagezustand gegenüber der Sekundärzelle (10) elektrisch isoliert sind.

3. Batteriemodul (8) nach Anspruch 2,
wobei der Thermistor (26) auf der Isolationsschicht (34) aufliegt.

4. Batteriemodul (8) nach einem der Ansprüche 1 bis 3,
wobei der Ferritmantel (42) als eigenstabiles Spritzgießbauteil ausgebildet ist.

5. Batteriemodul (8) nach einem der Ansprüche 1 bis 3,
wobei der Ferritmantel (42) aus einem vergleichsweise flexiblen Folienmaterial ausgebildet ist.

6. Batteriemodul (8) nach einem der Ansprüche 1 bis 5,
wobei der Kupfermantel (36) aus einer, vorzugsweise zumindest innenseitig mit einer Isolationsschicht überzogenen, Kupferfolie ausgebildet ist.

7. Batteriemodul (8) nach Anspruch 6,
wobei die Kupferfolie eine Stärke von 0,2 Millimeter aufweist und bandartig mit endseitig zueinander komplementären Verhakungsstrukturen ausgeformt ist, die unter Bildung eines Ringmantels ineinander gehakt sind.

8. Batteriemodul (8) nach Anspruch 6 oder 7,
wobei die Isolationsschicht die Kupferfolie auch außenseitig überzieht und wobei der Thermistor (26) außenseitig auf der Kupferfolie aufliegt.

9. Batteriemodul (8) nach einem der Ansprüche 1 bis 8,
aufweisend einen Schaltungsträger (40), der die Sicherung (14), den Resonanzkondensator (18) und den Thermistor (26) trägt.

10. Batteriemodul (8) nach Anspruch 9,
wobei der Schaltungsträger (40) flexibel ausgebildet ist, den Ferritmantel (42) umlaufend angeordnet ist und die Induktionsspule (12) in Form einer Leiterbahn trägt.

11. Batteriemodul (8) nach den Ansprüchen 1 bis 4, 6, 8 und 9,
wobei die Kupferfolie des Kupfermantels (36) eine Stärke von wenigstens 0,08 und weniger als 0,15 Millimeter, insbesondere von etwa 0,13 Millimeter, aufweist, und wobei die Induktionsspule (12) als Litzenspule oder Drahtspule auf den Ferritmantel (42) aufgebracht ist.

12. Batteriemodul (8) nach den Ansprüchen 1 bis 3, 5, 7, 9 und 10.

13. Hörvorrichtung, insbesondere Hörhilfegerät, bevorzugt ITE-Hörhilfegerät (1) mit dem Batteriemodul (8) nach einem der Ansprüche 1 bis 12.
